(19) Europäisches Patentamt
European Patent Office
Office européen des brevets

(11) **EP 2 219 048 A2**

(12) **EUROPEAN PATENT APPLICATION**

(43) Date of publication:
**18.08.2010 Bulletin 2010/33**

(51) Int Cl.:
***G01T 1/20*** (2006.01)

(21) Application number: **10250202.8**

(22) Date of filing: **08.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **09.02.2009 JP 2009027456**

(71) Applicants:
• **Tokuyama Corporation**
**Shunan-shi, Yamaguchi 745-8648 (JP)**
• **Tohoku University**
**Aoba-ku**
**Sendai-shi**
**Miyagi 980-8577 (JP)**
• **Kabushiki Kaisha Kobe Seiko Sho**
**Kobe-shi, Hyogo 651-8585 (JP)**

(72) Inventors:
• **Fukuda, Kentaro**
**Shunan-shi, Yamaguchi 745-8648 (JP)**

• **Kawaguchi, Noriaki**
**Shunan-shi, Yamaguchi 745-8648 (JP)**
• **Suyama, Toshihisa**
**Shunan-shi, Yamaguchi 745-8648 (JP)**
• **Yoshikawa, Akira**
**Sendai-shi, Miyagi 980-8577 (JP)**
• **Yanagida, Takayuki**
**Sendai-shi, Miyagi 980-8577 (JP)**
• **Yokota, Yuui**
**Sendai-shi, Miyagi 980-8577 (JP)**
• **Yokota, Yoshihiro**
**Kobe-shi, Hyogo 651-2271 (JP)**
• **Tachibana, Takeshi**
**Kobe-shi, Hyogo 651-2271 (JP)**

(74) Representative: **Jackson, Martin Peter**
**J.A. Kemp & Co.**
**14 South Square**
**Gray's Inn**
**London WC1R 5JJ (GB)**

(54) **Radiation detecting apparatus and method for detecting radiation**

(57)     A radiation detecting apparatus of the present invention is an apparatus comprising a scintillator for converting incident radiation into ultraviolet radiation having a wavelength of 220 nm or less, the scintillator being composed of, for example, Nd-doped $LaF_3$ crystals; and a diamond thin film sensor for guiding the resulting ultraviolet radiation and converting it into an electrical signal, the radiation detecting apparatus being adapted to transform the incident radiation to the electrical signal.

The radiation detecting apparatus can detect radiation, such as X-rays, $\alpha$ rays, $\beta$ rays, $\gamma$ rays, or neutron rays, with high sensitivity. The radiation detecting apparatus also has a fast response, is very easy to downsize, has high resistance to radiation, and can be preferably used in the medical field, the industrial field, or the security field.

Fig. 1

**Description**

Field of the Invention

This invention relates to a novel radiation detecting apparatus, especially, a radiation detecting apparatus which can be suitably used in the medical field, the industrial field, and the security field.

Description of the Prior Art

Technologies using radiation are making remarkable progress even now in wide variety of fields such as the medical field including positron emission tomography and X-ray radiography, the industrial field including various nondestructive tests, and the security field including radiation monitors and inspection of personal belongings. A radiation detecting apparatus is an elemental technology which plays an important role in radiation utilization technologies. With the progress of the radiation utilization technologies, more advanced performance concerning detection sensitivity, positional resolution for the incidence position of radiation, fast response, or radiation resistance is demanded of the radiation detecting apparatus. As the radiation utilization technologies spread, low costs and downsizing are also demanded of the radiation detecting apparatus.

A currently known example of the radiation detecting apparatus is a scintillation detector comprising a combination of a scintillator which converts incident radiation into visible light, and a photosensor which receives the resulting visible light and converts the visible light into an electrical signal. The scintillation detector uses the scintillator having a high probability of interacting with radiation, and is thus characterized in that it has a high detection sensitivity toward radiation, and can detect, particularly efficiently, highly penetrative radiations such as $\gamma$ rays or neutron rays. However, a photomultiplier tube, which is generally used as the photosensor of the scintillation detector, is difficult to downsize, and has imposed limitations on the improvement of positional resolution and downsizing of the radiation detecting apparatus. Because of its high price, moreover, the photomultiplier tube has posed the problem of difficulty in achieving cost reduction.

A photodiode using a silicon-based semiconductor thin film is known as a photosensor whose downsizing and cost reduction are relatively easy. The photodiode using such a semiconductor thin film has low resistance to radiation, and has involved the problem that its performance deteriorates over time in uses exposed to a high irradiation dose of radiation. Under these circumstances, the development of a diamond thin film sensor as a novel photosensor is proceeding. The diamond thin film sensor has many advantages such that it is highly resistant to radiation, it has a fast response comparable to that of the above-mentioned photodiode, it can be downsized very easily, and because of its wide band gap, it is capable of a stable operation at room temperature or high temperatures.

However, the diamond thin film sensor has a sensitive wavelength region, as a photosensor, limited to an ultraviolet region of 220 nm or less, and has thus been defective in that it has no sensitivity to visible light resulting from the conventional scintillator. In connection with the diamond thin film sensor, moreover, there have been no research and development on increased sensitivity for detecting feeble light (ultraviolet radiation) generated from the scintillator. Uses of the conventional diamond thin film sensor have been restricted to ultraviolet intensity monitors, exclusively, targeted at high-power ultraviolet rays such as those from an excimer lamp and an excimer laser (see non-patent document 1). Nor have any attempts been made to achieve the application of a combination of the diamond thin film sensor and the scintillator to the radiation detecting apparatus.

[Prior Art Documents]

[Non-Patent Documents]

[Non-patent document 1] Kazushi Hayashi et al., "Durable ultraviolet sensors using highly oriented diamond films," Diamond & Related Materials, 15, 792 (2006).

Summary of the Invention

It is an object of the present invention to provide a novel radiation detecting apparatus, and a novel method for detecting radiation, which can detect radiation, such as X-rays, $\alpha$ rays, $\beta$ rays, $\gamma$ rays, or neutron rays, with high sensitivity.

The inventors of the present invention have conducted various studies on a scintillator which emits light in the ultraviolet region, and have found a scintillator which emits light at 220 nm or less, the sensitive wavelength region of the diamond thin film sensor. The inventors have also found that the diamond thin film sensor is preferred especially in terms of conversion efficiency in converting ultraviolet radiation into an electrical signal, among various ultraviolet sensors, as a sensor for sensing feeble ultraviolet radiation generated by the scintillator. These findings have led the inventors to accomplish the present invention.

According to the present invention, there is provided a radiation detecting apparatus, comprising: a scintillator for converting incident radiation into ultraviolet radiation; and a diamond thin film sensor for converting the resulting ultraviolet radiation into an electrical signal, and wherein the radiation is transformed to the electrical signal.

In the radiation detecting apparatus of the present invention, the following features are preferred:

(1) The scintillator is metal fluoride crystals.
(2) The scintillator is a scintillator containing a rare earth element.
(3) The scintillator is a scintillator which performs core-valence light emission.
(4) The scintillator is a scintillator containing 0.5 to 20 atoms/$nm^3$ of $^6Li$ per unit volume, and having an effective atomic number of 10 to 40, and the radiation is neutron rays.
(5) The diamond thin film sensor is of a photoconductor type.
(6) A light receiver in the photoconductor type diamond thin film sensor comprises polycrystalline or highly oriented undoped diamond.
(7) The radiation detecting apparatus further comprises a pair of electrodes, with a light sensitive area of diamond being sandwiched therebetween; and a power source for applying a voltage between the electrodes of 20 V or higher, but 250 V or lower, and a coating layer comprising a compound which is any one of $SiO_2$ $Al_2O_3$, AlN, $CaF_2$ and $MgF_2$ is provided in contact with the light sensitive area and the surfaces of the electrodes.
(8) The thickness of the coating layer is 3 nm or more, but 100 nm or less.
(9) The spacing between the electrodes is 5 $\mu$m to 50 $\mu$m.
(10) The radiation detecting apparatus has a structure in which the single scintillator and the single diamond thin film sensor are provided in a pair, and a plurality of the pairs are arranged in a linear array or a planar array.

According to the present invention, there is also provided a method for detecting radiation, comprising: allowing radiation to be incident on a scintillator to convert the radiation into ultraviolet radiation; then guiding the resulting ultraviolet radiation to a diamond thin film sensor to generate an electrical signal; and detecting the resulting electrical signal.

According to the radiation detecting apparatus obtained by the present invention, radiation, such as X-rays, $\alpha$ rays, $\beta$ rays, $\gamma$ rays, or neutron rays, can be detected with high sensitivity. The radiation detecting apparatus has a fast response, is very easy to downsize, has high resistance to radiation, and can be preferably used in the medical field, the industrial field, or the security field.

Brief Description of the Drawings

Fig. 1 is a drawing of the principle of a radiation detecting apparatus according to the present invention.
Fig. 2 is a schematic view of a crystal manufacturing apparatus using the micro-pulling-down method.
Fig. 3 is a schematic view of a crystal manufacturing apparatus using the Czochralski method.
Fig. 4 is a schematic view of the radiation detecting apparatus according to the present invention.
Fig. 5 shows a pulse height distribution spectrum prepared in Example 1.
Fig. 6 shows a pulse height distribution spectrum prepared in Example 2.
Fig. 7 shows a pulse height distribution spectrum prepared in Example 3.
Fig. 8 is a view showing an embodiment of the radiation detecting apparatus according to the present invention.
Fig. 9 is a view showing an embodiment of the radiation detecting apparatus according to the present invention.
Fig. 10 is a sectional schematic view of a diamond thin film sensor.

Detailed Description of the Invention

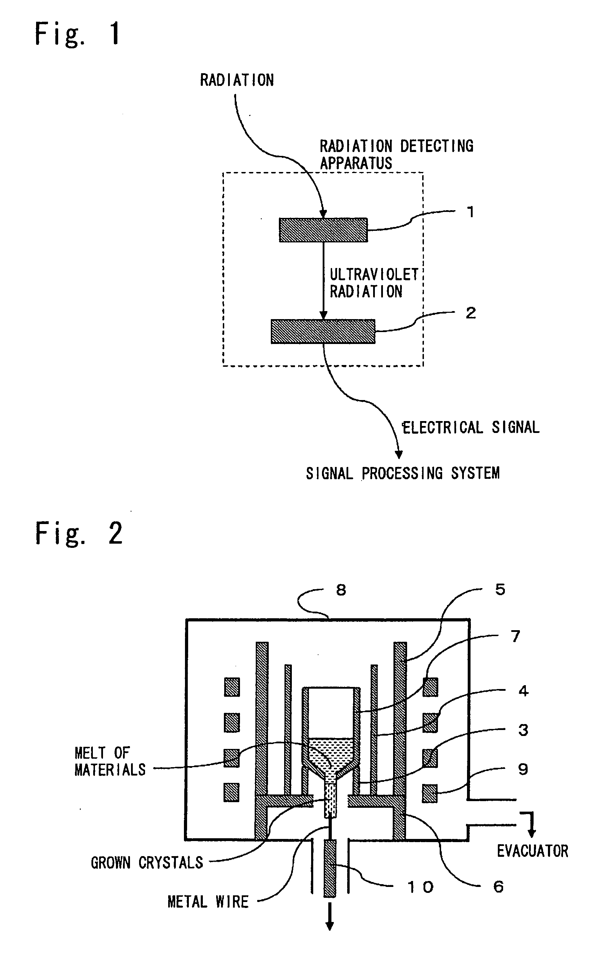

The operating principle of the radiation detecting apparatus according to the present invention will be described using Fig. 1. First, incident radiation is converted by a scintillator 1 into ultraviolet rays having a wavelength of 220 nm or less (may hereinafter be referred to simply as ultraviolet rays or ultraviolet radiation). Then, the resulting ultraviolet radiation is guided to a diamond thin film sensor 2 to be converted into an electrical signal by the diamond thin film sensor. The electrical signal is processed by a signal processing system, whereby the incident radiation can be detected as the electrical signal. The radiation detecting apparatus according to the present invention will now be described in more detail.

<Radiation to be detected>

With the radiation detecting apparatus according to the present invention, the radiation to be detected is not limited, and this apparatus can be suitably used to detect X-rays, $\alpha$ rays, $\beta$ rays, $\gamma$ rays, or neutron rays.

<Scintillator>

A scintillator, a constituent element of the radiation detecting apparatus of the present invention, may be a scintillator which generates ultraviolet radiation having a wavelength of 220 nm or less upon the incidence of radiation. Such a scintillator can be used without particular limitations. However, in order that the ultraviolet radiation produced by the incidence of the radiation is allowed to exit without being absorbed by the scintillator itself, it is preferred to use a scintillator which minimally absorbs ultraviolet radiation. Examples of such a scintillator minimally absorbing ultraviolet radiation are scintillators comprising metal fluoride crystals to be described later; crystals of metal oxides such as $Al_2O_3$, $YAlO_3$, and $Lu_3Al_5O_{12}$; crystals of metal phosphates such as $LuPO_4$ and $YPO_4$; and crystals of some metal borates. The form of the scintillator is not limited, and crystals, glass or ceramics can be used as appropriate. In view of the efficiency of conversion from radiation into ultraviolet radiation, however, the use of crystals is preferred.

In the present invention, the use of a scintillator which generates vacuum ultraviolet radiation, i.e., ultraviolet radiation having a wavelength of 200 nm or less, is particularly preferred in consideration of the efficiency of conversion from ultraviolet radiation into an electrical signal in the diamond thin film sensor.

As the scintillator producing vacuum ultraviolet radiation, metal fluoride crystals can be used preferably. Since vacuum ultraviolet radiation has the property of being absorbed by many materials, the problem arises that the vacuum ultraviolet radiation generated by the incidence of the radiation is absorbed by the scintillator itself. However, the metal fluoride crystals, exceptionally, have the characteristic of minimally absorbing vacuum ultraviolet radiation, and are thus preferably usable in the present invention.

The types of the metal fluoride crystals are not limited, and metal fluoride crystals which have been publicly known can be used optionally. Concretely, they are exemplified by crystals comprising at least one of lithium fluoride, magnesium fluoride, calcium fluoride, scandium fluoride, titanium fluoride, chromium fluoride, manganese fluoride, iron fluoride, cobalt fluoride, nickel fluoride, copper fluoride, zinc fluoride, gallium fluoride, germanium fluoride, aluminum fluoride, strontium fluoride, yttrium fluoride, zirconium fluoride, barium fluoride, lanthanum fluoride, cerium fluoride, praseodymium fluoride, neodymium fluoride, europium fluoride, gadolinium fluoride, terbium fluoride, erbium fluoride, thulium fluoride, ytterbium fluoride, lutetium fluoride, hafnium fluoride, tantalum fluoride, and lead fluoride.

The preferred scintillator in the present invention is a scintillator containing a rare earth element or a scintillator performing core-valence light emission.

The rare earth element-containing scintillator relies, as the principle of light emission, on the electron transition of the rare earth element by the incidence of the radiation, and can efficiently convert the radiation into ultraviolet radiation. The rare earth element is not limited, as long as it shows emission of ultraviolet radiation upon the electron transition. Particularly preferred is that which causes 5d-4f transitional light emission by electron transition from the 5d level to the 4f level, or charge transfer transitional light emission involving charge transfer from other atoms in the scintillator to the rare earth element, because this rare earth element has a short light emission lifetime and has a fast response. As the rare earth element exhibiting such 5d-4f transitional light emission, praseodymium (Pr), neodymium (Nd), erbium (Er), or thulium (Tm) can be used preferably. As the rare earth element showing charge transfer transitional light emission, europium (Eu) or ytterbium (Yb) can be used preferably.

A preferred mode of the scintillator containing the rare earth element is exemplified by a scintillator obtained by adding the above-mentioned rare earth element to the aforementioned scintillator comprising the metal fluoride crystals, metal oxide crystals or metal phosphate crystals. In this scintillator, the amount of addition of the rare earth element to be incorporated differs according to the type of the scintillator or the type of the rare earth element. Generally, the preferred amount of addition is in the range of 0.01 to 20 mol% based on the scintillator. By setting the amount of addition at 0.01 mol% or more, the intensity of light emission by the scintillator can be enhanced. By setting the amount of addition at 20 mol% or less, on the other hand, attenuation of light emission by the scintillator ascribed to concentration quenching can be suppressed.

The scintillator performing core-valence light emission relies, as the principle of light emission, on the recombination of electrons of the valence band and hole of the core band which is caused by the incidence of the radiation. This scintillator can convert the radiation into ultraviolet radiation with an extremely short wavelength. Moreover, its light emission lifetime is extremely short, and it has a fast response. Thus, it can be used preferably. Examples of the scintillator effecting core-valence light emission are KF, RbF, $BaF_2$, $LiBaF_3$, $KMgF_3$, $KCaF_3$, $KYF_4$, $K_2YF_5$, $KLuF_4$, and $KLu_2F_7$.

The preferred chemical composition of the scintillator of the present invention differs according to the radiation to be detected. If the radiation to be detected is $\gamma$ rays or X-rays, it is preferred to use a scintillator having a high density and a large effective atomic number in order to enhance a stopping power against photons of high energy. This effective atomic number is an indicator defined by Equation [1] shown below, and affects the stopping power against γ rays or X-rays. The larger the effective atomic number, the higher the stopping power against γ rays or X-rays becomes, thus increasing the sensitivity of the scintillator to γ rays or X-rays.

$$\texttt{Effective atomic number} = (\textstyle\sum W_i Z_i{}^4)^{1/4} \qquad [1]$$

where $W_i$ and $Z_i$, respectively, represent the mass fraction and the atomic number of the ith element among the elements constituting the scintillator.

If the radiation to be detected is neutron rays, it is preferred to use a scintillator containing $^6Li$ in an amount of 0.5 to 20 atoms/$nm^3$ per unit volume, and having an effective atomic number of 10 to 40. The $^6Li$ content refers to the number of the $^6Li$ atoms contained in 1 $nm^3$ of the scintillator. The $^6Li$ content affects sensitivity to neutron radiation, and as the $^6Li$ content increases, the sensitivity to neutron radiation increases. Such $^6Li$ content can be adjusted, as appropriate, by selecting the chemical composition of the scintillator and adjusting the $^6Li$ isotopic composition of the lithium material. The $^6Li$ isotopic composition refers to the element proportion of the $^6Li$ isotope to all lithium elements, and is about 7.6% in natural lithium.

The method of adjusting the $^6Li$ isotopic composition of the lithium material is, for example, a method comprising using a general-purpose material having a natural isotopic composition as a starting material, and concentrating the $^6Li$ isotope to the desired $^6Li$ isotopic composition; or a method which makes preparations for a concentrated material having $^6Li$ concentrated beforehand to a proportion equal to or higher than the desired $^6Li$ isotopic composition, and mixing the concentrated material and the above general-purpose material for adjustment.

By setting the aforementioned $^6Li$ content at 0.5 atom/$nm^3$ or more, a scintillator having sufficient sensitivity to neutral radiation can be obtained, and this is preferred. To increase its sensitivity to neutron rays further, it is particularly preferred that the $^6Li$ content be set at 2 atoms/$nm^3$ or more. However, the $^6Li$ content is preferably 20 atoms/$nm^3$ or less. In order to achieve a $^6Li$ content in excess of 20 atoms/$nm^3$, there is need to use a large amount of a special lithium material having $^6Li$ concentrated beforehand to a high level. This results in an extremely high cost of production.

The above $^6Li$ content can be determined by finding, beforehand, the density of the scintillator, the mass fraction of the Li element in the scintillator, and the $^6Li$ isotopic composition of the lithium material, and substituting these parameters into the following Equation [2]:

$$\texttt{}^6\texttt{Li content} = \rho \times W \times C/(700 - C) \times A \times 10^{-23} \qquad [2]$$

where ρ represents the density of the scintillator [g/$cm^3$], W represents the mass fraction of the Li element in the scintillator [mass %], C represents the $^6Li$ isotopic composition of the lithium material [%], and A represents Avogadro's number [$6.02 \times 10^{23}$].

In the present invention, if the radiation to be detected is neutron radiation, it is preferred to set the aforementioned effective atomic number at 10 to 40. By setting the effective atomic number at 40 or lower, it is possible to constitute a scintillator for neutron radiation which can sufficiently reduce a background noise ascribed to γ rays, and can measure neutron radiation without undergoing disturbance by γ rays. Even when the effective atomic number is set at less than 10, on the other hand, the noise reducing effect is not improved very greatly, and merely the selection of a material for use as a scintillator is markedly restricted.

The effective atomic number is specific to the chemical composition of the scintillator, as is clear from the aforementioned Equation [1]. By selecting the type of the material for use as the scintillator, therefore, the effective atomic number can be adjusted as appropriate. The most preferred scintillator that contains 0.5 to 20 atoms/$nm^3$ of $^6Li$ per unit volume and has an effective atomic number of 10 to 40 is crystals of a lithium-based fluoride, such as $LiCaAlF_6$, $LiSrAlF_6$, or $LiYF_4$, which contains a rare earth element.

<Method of producing scintillator>

In the present invention, the method of producing the scintillator is not limited, and can be a publicly known manufacturing method. In producing metal fluoride crystals, the preferred scintillator, it is preferred to produce these crystals by the micro-pulling-down method or the Czochralski method.

Metal fluoride crystals excellent in quality, such as transparency, can be produced by adopting the micro-pulling-down method or the Czochralski method. According to the micro-pulling-down method, in particular, the crystals can be directly produced in a specific shape, and in a short time. According to the Czochralski method, on the other hand, large crystals several inches in diameter can be produced at a low cost. An explanation will be offered for a general method in producing metal fluoride crystals by the micro-pulling-down method.

Predetermined amounts of materials are charged into a crucible 7 provided with a hole at its bottom. The shape of the hole provided in the bottom of the crucible is not limited, but is preferably a cylindrical shape having a diameter of 0.5 to 5 mm and a length of 0 to 2 mm. The purity of the materials is not limited, but is preferably 99.99% or more. By using such a material mixture, the purity of metal fluoride crystals can be increased, and the characteristics such as light emission intensity are improved. Such materials used may be powdery or particulate materials, or may be used after being sintered or melted and solidified beforehand.

Then, the crucible 7 charged with the above materials, an after-heater 3, a heater 4, a heat insulating material 5, and a stage 6 are set as shown in Fig. 2. The interior of a chamber 8 is evacuated up to $1.0 \times 10^{-3}$ Pa or lower using a vacuum apparatus, and then an inert gas such as high purity argon is introduced into the chamber for gas exchange. The pressure inside the chamber after gas exchange is not limited, but is generally atmospheric pressure. The gas exchange operation can remove water adhering to the materials or the interior of the chamber, and can prevent the deterioration of the crystals due to such water. To avoid the adverse influence of water which cannot be removed even by the gas exchange operation, it is preferred to use a solid scavenger such as zinc fluoride or a gaseous scavenger such as tetrafluoromethane. If the solid scavenger is used, a method of mixing it into the materials beforehand is preferred. If the gaseous scavenger is used, a method of mixing it with the above inert gas and introducing the mixture into the chamber is preferred.

After the gas exchange operation is performed, the materials are heated by a radio-frequency coil 9 and the heater 4 until they are melted. In the present invention, the heating method is not limited, and a resistance heating type carbon heater, for example, can be used as appropriate in place of the radio-frequency coil-heater configuration, for example. Then, a melt of the molten materials is pulled out of the hole of the crucible bottom to start the production of crystals. With the output of the radio-frequency coil being adjusted as appropriate, the melt is continuously pulled down at a constant pulling-down speed, whereby desired fluoride crystals can be obtained. The pulling-down speed is not limited, but is preferably in the range of 0.5 to 50 mm/hr.

Next, an explanation will be offered for a general method in producing the fluoride crystals of the present invention by the Czochralski method.

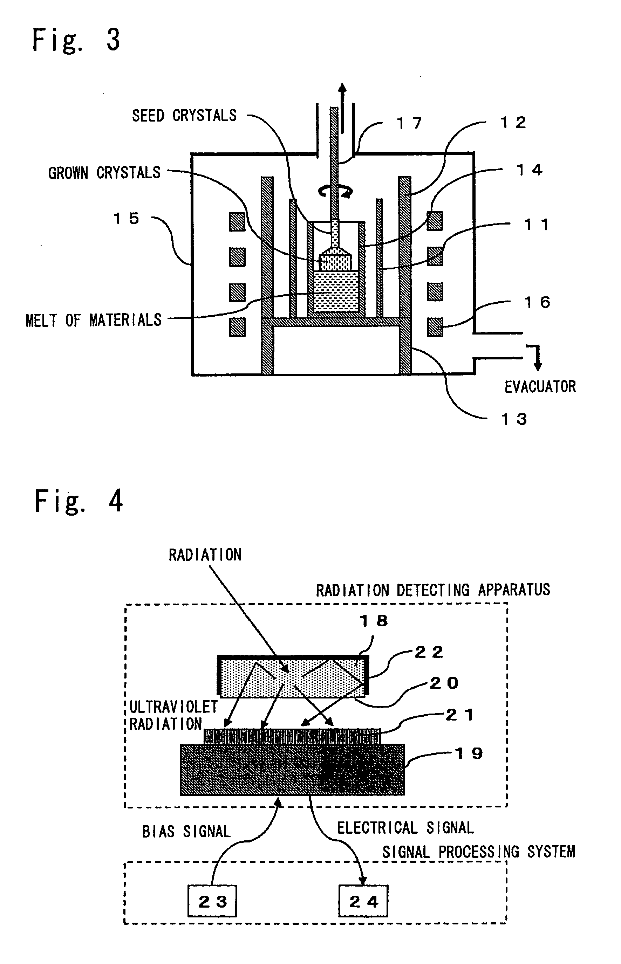

Predetermined amounts of materials are charged into a crucible 14. As the materials used and their adjustment method, the materials and method mentioned in the paragraph of the micro-pulling-down method are adopted as such. Then, the crucible 14 charged with the above materials, a heater 11, a heat insulating material 12, and a stage 13 are set as shown in Fig. 3. The interior of a chamber 15 is evacuated to $1.0 \times 10^{-3}$ Pa or lower using a vacuum apparatus, and an inert gas such as high purity argon is introduced into the chamber for gas exchange. The pressure inside the chamber after the gas exchange is not limited, but is generally atmospheric pressure. The gas exchange operation can remove water adhering to the materials or the interior of the chamber, and can prevent the deterioration of crystals due to such water. To avoid the influence of water which cannot be removed even by the gas exchange operation, it is preferred to use a solid scavenger such as zinc fluoride or a gaseous scavenger such as tetrafluoromethane. If the solid scavenger is used, a method of mixing it into the materials beforehand is preferred. If the gaseous scavenger is used, a method of mixing it with the above inert gas and introducing the mixture into the chamber is preferred.

After the gas exchange operation is performed, the materials are heated by a radio-frequency coil 16 and the heater 11 until they are melted. Seed crystals installed at the leading end of a pulling-up rod 17 are touched the melt of the molten materials. The heating method is not limited, and a resistance heating type carbon heater, for example, can be used as appropriate in place of the aforementioned radio-frequency coil-heater configuration, for example.

Then, the seed crystals are pulled up while being rotated to start the growth of crystals. Immediately after the start of crystal growth, the crystal diameter is increased at a constant rate and adjusted to a desired crystal diameter. In such an operation for increasing the crystal diameter, it is preferred to perform a necking operation for decreasing the crystal diameter once and then increasing it, with the aim of decreasing the dislocation density of the crystals. After the crystal diameter is increased to a predetermined crystal diameter, continuous pulling-up is carried out at a constant pulling-up speed. The pulling-up speed is not limited, but is preferably in the range of 0.5 to 10 mm/hr. At a time when the pulling-up is performed by a predetermined length, the output of the heater is raised to detach the crystals from the material melt, and then the crystals are slowly cooled. By this procedure, the desired crystals can be obtained.

In the above series of crystal growing operations, it is preferred to use a crystal diameter controller comprising a load cell provided in an upper part of the pulling-up rod, and a circuit for giving feedback on a signal from the load cell to the heater output. According to the crystal diameter controller, it becomes easy to product the crystals of the desired shape stably.

In the present invention, at the time of production of the metal fluoride crystals, an annealing operation may be performed after the production of the crystals, for the purpose of eliminating crystal defects due to thermal strain, etc. The resulting fluoride crystals have satisfactory processability, and it is easy to use them processed in a desired shape.

During processing, a cutter such as a blade saw or a wire saw, a grinder, or a polishing apparatus, which is publicly known, can be used without any limitations.

<Diamond thin film sensor>

The diamond thin film sensor, which is a constituent element of the radiation detecting apparatus of the present invention, is composed of a diamond thin film and a read-out electrode. As its examples, various forms of sensors are named, such as those of a photoconductor type, a photodiode type, an avalanche photodiode type, and a phototransistor type. The diamond thin film sensor is preferably of the photoconductor type for the reasons offered below.

Since the light emission lifetime of the scintillator operated once is as short as several nanoseconds, the diamond thin film sensor needs to have comparable response speed and high sensitivity. A detailed study of various ultraviolet sensors having diamond used in a photosensitive member has shown that a photoconductor type sensor using undoped diamond is suitable. The photoconductor type sensor uses undoped diamond (diamond with a low content of impurities and normally having high insulation of 100 GΩ or more), and has a pair of electrodes formed thereon. When ultraviolet radiation with a wavelength of 227 nm or less corresponding to band gap energy is incident on the diamond between the electrodes, an electron-hole pair is produced. Thus, the electrical resistance lowers to bring about electrical conductivity. Upon the application of a bias voltage between the electrodes, an electric current flows, and this current is measured by an external circuit, whereby the ultraviolet radiation can be detected. The higher the bias voltage at this time, the more the photocurrent becomes, and the higher the sensitivity is. If the bias voltage is excessively high, however, a dark current increases, or creeping dielectric breakdown or dielectric breakdown within the diamond is caused. Hence, the bias voltage needs to be set at a moderate value. The optimal value of the bias voltage changes according to the spacing between the electrodes, the length and shape of the electrode, and the quality, surface shape and surface coating of the diamond.

The photodiode type using the pn junction of diamond does not necessarily have sufficient sensitivity. The avalanche photodiode of silicon is capable of high sensitivity visible light detection, but tends to show low sensitivity to vacuum ultraviolet radiation. The avalanche photodiode of diamond can theoretically be a high sensitivity deep ultraviolet sensor, but currently, poses a problem with production, such that a technology for making low resistance n type diamond has not matured. The phototransistor type requires many manufacturing steps, and incurs a relatively high cost, so that it is inferior in practical applicability. Thus, the photoconductor type is preferred and, moreover, it is preferred for a light receiver in the photoconductor type diamond thin film sensor to comprise polycrystalline or highly oriented undoped diamond.

When the light receiver in the photoconductor type diamond thin film sensor is rendered polycrystalline or highly oriented undoped diamond, the attenuation speed is faster than a single crystal, thus showing a fast response and facilitating pulse counting. By using undoped diamond with an impurities concentration of $1\times10^{15}/cm^3$ or lower, moreover, the dark current in 1 $mm^2$ of the light sensitive area can be kept down to a sufficiently low value of 10 pA or less, when the electrode-to-electrode spacing is 10 $\mu$m and the bias voltage is 35 V, for example.

Preferably, the photoconductor type diamond thin film sensor has the pair of electrodes, with the light sensitive area of diamond sandwiched therebetween, and is equipped with a power source for applying a voltage between the electrodes of 20 V or higher, but 250 V or lower, desirably, 50 V or high, but 160 V or lower. It is preferred for the photoconductor type diamond thin film sensor to have a structure in which a coating layer comprising any one of $SiO_2$ $Al_2O_3$, AlN, $CaF_2$ and $MgF_2$ is present in contact with the light sensitive area and the electrode surfaces.

In the photoconductor type diamond thin film sensor, the bias voltage applied between the electrodes is set at 20 V or more, whereby sensitivity to feeble light can be obtained, and by further setting the bias voltage at 50 V or more, sufficient sensitivity is obtained. The upper limit of the bias voltage, however, cannot be rendered very great, in terms of the practical applicability of the power source including the cost. From the viewpoint of the practical applicability, it is desirable that the bias voltage be set at 250 V or less. The spacing between the electrodes needs to be rendered large according to the high value of the bias voltage, so that the surface area of the sensor becomes large. This not only increases the cost of the sensor, but also results in coarse pixels in producing an image sensor. In consideration of these facts, the bias voltage is more desirably set at 160 V or lower.

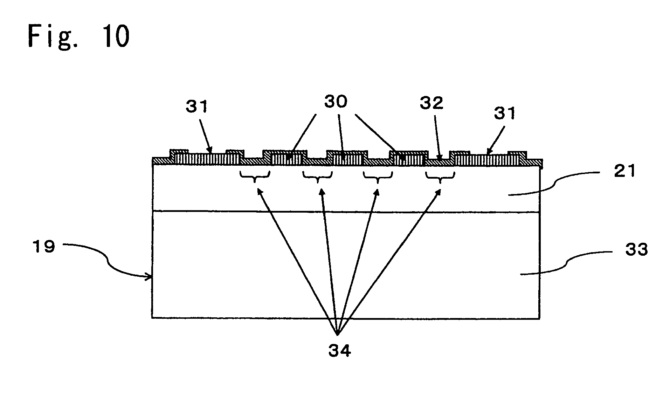

The light sensitive area of the diamond sensor is coated thinly with an insulating material having a larger band gap than that of diamond, whereby creeping discharge upon application of a high bias voltage can be suppressed. The coating material is particularly desirably $CaF_2$, $MgF_2$, $SiO_2$, $Al_2O_3$ or AlN. By coating the surfaces of the electrodes as well in such a manner as to be continued from the light sensitive area, creeping discharge can be suppressed further effectively (Fig. 10). The thickness of this coating layer is 3 nm or more, but 100 nm or less. The coating layer may be deposited by chemical vapor deposition (CVD), evaporation method, or sputtering. If its thickness is less than 3 nm, the coating layer is ineffective. If its thickness is more than 100 nm, the transmittance of ultraviolet radiation emitted from the scintillator decreases, and the sensitivity lowers noticeably.

The spacing between the electrodes is preferably 5 $\mu$m to 50 $\mu$m, and particularly preferably 10 $\mu$m to 20 $\mu$m.

In the photoconductor type diamond thin film sensor, it is advisable to increase the bias voltage, in order to impart sufficient sensitivity to feeble light. However, a dark current and noise increase, and a possibility for creeping discharge also increases. A larger spacing between the electrodes can reduce them, but too large a spacing conversely induces a decrease in sensitivity and an increase in the area of the sensor. By selecting an optimal spacing between the electrodes, however, these problems can be solved. An experimental investigation has shown that the spacing between the electrodes is desirably 5 $\mu$m to 50 $\mu$m, and more desirably 10 $\mu$m to 20 $\mu$m.

The use of the photoconductor type diamond thin film sensor can make the spacing between the electrodes and the spacing between the elements (may be called devices) small, partly because of the high dielectric breakdown voltage of diamond, and a minimum value of the order of 10 $\mu$m square per device can be realized. That it, it has become possible to divide the scintillator crystals finely, and combine sensors conformed to the resulting fine sizes into pairs, thereby preparing a one-dimensional or two-dimensional radiation detecting apparatus. Thus, higher resolution than that of a conventional comparable radiation detecting apparatus can be achieved.

<Radiation detecting apparatus>

The radiation detecting apparatus of the present invention is equipped with the above-described scintillator and diamond thin film sensor. Since the scintillator showing high sensitivity and fast response to radiation, and the diamond thin film sensor converting the response of the scintillator into an electrical signal with high efficiency and without delay are combined, a detecting apparatus excellent in responsiveness to radiation can be constituted. With such a combination, downsizing and cost reduction are easy, and a radiation detecting apparatus advantageous industrially, in particular, can be obtained. The radiation detecting apparatus of the present invention will be described using Fig. 4.

The radiation detecting apparatus of the present invention is constructed by installing a scintillator 18 and a diamond thin film sensor 19, which have been described earlier, and connecting a signal processing system, which is designed to take an electrical signal from the diamond thin film sensor, to the diamond thin film sensor.

The method of installing the above scintillator and diamond thin film sensor is not limited, if it is a method capable of admitting ultraviolet radiation generated by the scintillator into the diamond thin film sensor. The preferred method comprises providing the scintillator with an emission surface 20 for the ultraviolet radiation, and setting the emission surface and a diamond thin film 21 provided on the surface of the diamond thin film sensor in opposed position.

When the emission surface of the scintillator and the diamond thin film are set in opposed position, it is preferred to set the distance between the emission surface and the diamond thin film at about 10 mm or less, and dispose them in proximity to, or very close to, each other.

If the wavelength of the ultraviolet radiation generated by the scintillator is about 200 nm or less, it is preferred to remove oxygen from the gap between the emission surface and the diamond thin film. By removing oxygen from this gap, the ultraviolet radiation is not absorbed by oxygen, with the result that the detection sensitivity to the radiation is increased. As the method of removing oxygen from the gap, there can be preferably used a method of filling the gap with a gas such as nitrogen, or a method of keeping the gap in a vacuum. A method of charging grease between the emission surface and the diamond thin film is also usable preferably. According to such a method of charging grease, the ultraviolet radiation arriving at the emission surface from inside the scintillator can be led to the outside without being reflected by the emission surface, and the efficiency of incidence of the ultraviolet radiation on the diamond thin film sensor can be increased. The preferred grease is fluorine-based grease having a high refractive index and having high transparency to ultraviolet radiation.

In the present invention, the shape of the scintillator is not limited, and the scintillator can be used in a shape suitable for uses, such as a prismatic shape whose end surfaces are each a square shape several mm square or a rectangular shape and whose length is several tens of mm, or a cylindrical shape whose end surfaces are each a circle several tens of mm in diameter and whose length is several hundred mm. In any of these shapes, it is preferred to optically polish the emission surface opposing the diamond thin film sensor. By so doing, ultraviolet radiation generated by the scintillator can be incident on the diamond thin film sensor with high efficiency.

In the scintillator of the preset invention, it is preferred to apply an ultraviolet reflecting film 22 comprising aluminum or polytetrafluoroethylene to surfaces of the scintillator which do not oppose the diamond thin film sensor. By so doing, dissipation of the ultraviolet radiation generated by the scintillator can be prevented.

In the present invention, the shape of the diamond thin film provided on the surface of the diamond thin film sensor is not limited, but is preferably a plane. The size of the plane is preferably comparable to the size of the emission surface of the scintillator.

In the present invention, the signal processing system for taking an electrical signal from the diamond thin film sensor is not limited. However, the signal processing system is preferably equipped with a constant voltage power source 23 for applying the bias voltage to the diamond thin film sensor, and an amplifier 24 for amplifying the electrical signal taken from the diamond thin film sensor. The constant voltage power source is one designed to apply a constant bias voltage to the diamond thin film sensor, and a publicly known constant voltage power source can be used without particular restriction. The amplifier is one intended to amplify a feeble signal outputted by the diamond thin film sensor to form a greater electrical signal. An amplifier having gain of 10 to 1,000 can be used preferably. A method of installing a preamplifier in a stage preceding the main amplifier to boost the signal-to-noise ratio can also be used preferably.

It is a particularly preferred mode to equip the signal processing system with a multichannel pulse-height analyzer or the like, which can discriminate electrical signals taken from the diamond thin film sensor according to their strengths, because energy discrimination capability can be imparted to the radiation detecting apparatus. That is, radiation having specific energy can be selectively detected by discriminating the electrical signals taken from the diamond thin film sensor according to their strengths.

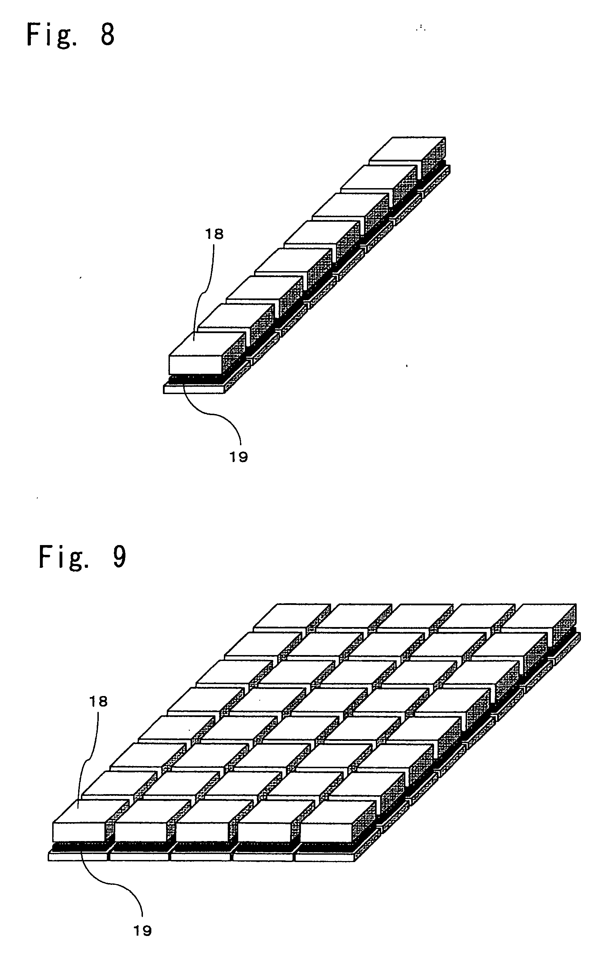

The radiation detecting apparatus of the present invention is preferably of a structure in which the above-mentioned single scintillator and the above-mentioned single diamond thin film sensor are provided in a pair, and a plurality of the pairs are arranged in a linear array or a planar array (Figs. 8 and 9).

<Method of detecting radiation>

A method for detecting radiation by use of the apparatus of the present invention will be described concretely.

With a constant bias voltage being applied to the diamond thin film sensor, radiation is projected onto the radiation detecting apparatus. The projected radiation is incident on the scintillator, where it is converted into ultraviolet radiation. Then, the ultraviolet radiation generated by the scintillator is guided to the diamond thin film sensor, where the ultraviolet radiation is converted into an electrical signal. The electrical signal outputted by the diamond thin film sensor is acquired. The electrical signal outputted by the radiation detecting apparatus is a pulse signal, and the strength of the signal corresponds to the energy of the incident radiation, while the frequency of the signal corresponds to the radioactivity of the radiation. Thus, the detecting method of the present invention can be used for the quantitative determination of radiation, if the strength and frequency of the output signal in response to the energy and radioactivity of the radiation are investigated beforehand in connection with the radiation to be detected, whereby a calibration curve is prepared.

Examples

The present invention will be described concretely with reference to its Examples, but the present invention is in no way limited by these Examples. Nor are all combinations of the characteristics explained in the Examples necessarily essential to the means for solving the problems which the present invention tackles.

Production Example 1

$LaF_3$ crystals doped with Nd as a rare earth element were produced using a crystal manufacturing apparatus by the micro-pulling-down method as shown in Fig. 2. Lanthanum fluoride and neodymium fluoride each having purity of 99.99% or more were used as materials.

An after-heater 3, a heater 4, a heat insulating material 5, a stage 6, and a crucible 7 used were made of high purity carbon, and the shape of a hole provided in the bottom of the crucible was a cylindrical shape 2.2 mm in diameter and 0.5 mm in length. First, 0.91 g of lanthanum fluoride and 0.10 g of neodymium fluoride were weighed, and thoroughly mixed to obtain a material mixture, which was charged into the crucible 7. The crucible 7 charged with the materials was set at an upper part of the after-heater 3, and the heater 4 and the heat insulating material 5 were sequentially set around them. Then, the interior of a chamber 8 was evacuated to $5.0 \times 10^{-4}$ Pa by an evacuator comprising an oil-sealed rotary vacuum pump and an oil diffusion pump. Then, a tetrafluoromethane-argon gas mixture was introduced to atmospheric pressure into the chamber 8 for gas exchange.

A radio-frequency current was applied to a radio-frequency coil 9 to heat the materials by induction heating and melt them. A W-Re wire provided at the leading end of a pulling-down rod 10 was inserted into the above hole of the bottom of the crucible 7 to pull down a melt of the materials from the hole and start crystallization. With the output of the radio-frequency being adjusted, the melt was pulled down continuously for 15 hours at a rate of 3 mm/hr to obtain $LaF_3$ crystals containing neodymium as a rare earth element. The crystals were high quality crystals 2.2 mm in diameter and 45 mm in length and free of cloudiness and cracks. In the present Production Example, the $LaF_3$ crystals containing neodymium as a rare earth element were used as a scintillator.

This scintillator was cut to a length of 7 mm by a wire saw provided with a diamond wire, and was ground to be processed into a shape having a length of 7 mm, a width of 2 mm and a thickness of 1 mm. Then, a surface of the processed article with a length of 7 mm and a width of 2 mm was mirror-polished to provide an emission surface for use in a radiation detecting apparatus. In connection with the so produced scintillator of the present Production Example, the wavelength of ultraviolet radiation which is emitted upon conversion from radiation incident on the scintillator was measured by the method described below.

Using a sealed X-ray tube with a tungsten target, the scintillator was irradiated with X-rays. A tube voltage and a tube current when X-rays were generated by the X-ray tube were set at 60 kV and 40 mA, respectively. Ultraviolet radiation generated from the emission surface of the scintillator was collected with a collection mirror, and introduced to the monochromator. The intensities at each wavelength were recorded to obtain the spectrum of the ultraviolet radiation generated by the scintillator. As a result of this measurement, the scintillator of the present Production Example was confirmed to convert the incident radiation into ultraviolet radiation having a wavelength of 173 nm.

Production Example 2

Using 0.84 g of barium fluoride having purity of 99.99% or more, $BaF_2$ crystals, which serve as a scintillator performing core-valence light emission, were produced and processed by the same procedure as in Production Example 1. In connection with the resulting scintillator, the wavelength of ultraviolet radiation which is emitted upon conversion from radiation incident on the scintillator was measured by the same method as in Production Example 1. The scintillator of the present Production Example was confirmed to convert the incident radiation into ultraviolet radiation having a wavelength of 190 nm.

Production Example 3

Using 68 mg of lithium fluoride, 203 mg of calcium fluoride, 219 mg of aluminum fluoride, and 10 mg of neodymium fluoride, each having purity of 99.99% or more, $LiCaAlF_6$ crystals containing neodymium as a rare earth element were obtained by the same procedure as in Production Example 1. The lithium fluoride used had a $^6Li$ isotopic composition of 50%. The neodymium-containing $LiCaAlF_6$ crystals serve as a scintillator containing 5 atoms/nm$^3$ of $^6Li$ per unit volume, having an effective atomic number of 15, and preferably usable for the detection of neutron rays. In connection with this scintillator, the wavelength of ultraviolet radiation which is emitted upon conversion from radiation incident on the scintillator was measured by the same method as in Production Example 1. The scintillator of the present Production Example was confirmed to convert the incident radiation into ultraviolet radiation having a wavelength of 178 nm.

Preparation Example 1

A diamond thin film sensor, a constituent element of the radiation detecting apparatus of the present invention, was prepared by the method described below. The diamond thin film sensor of the present Preparation Example is a photoconductor type diamond thin film sensor using highly oriented diamond in its light sensitive area.

A highly oriented diamond thin film deposited on a substrate comprising a single crystal Si wafer was used in which the crystal face having an area of 90% or more comprises the (100)-plane, an area proportion of 80% or more of the surface is oriented within 10° from the crystal orientation of the substrate in both of the normal direction and the plane direction, and diamond crystal grains having a grain size of 3 to 8 $\mu$m account for an area proportion of 80% or more. A pair of counter electrodes were formed on the highly oriented diamond thin film by photolithography. The electrodes comprised platinum deposited as films by sputtering, and had a thickness of 200 nm. Both electrodes were spaced 10 $\mu$m apart, were interdigitated, and were 6 $\mu$m thick per electrode. Based on the relationship between the grain size of the diamond and the electrode-to-electrode spacing, at least one grain boundary exists between the electrodes. The diamond was exposed between both electrodes, and serves as a light sensitive area. The total area of the light sensitive area and the electrodes may be selected, as appropriate, according to the desired device area and the required sensitivity, and was set at 2 mm square in the present Preparation Example. The opposing two corners of the high oriented diamond thin film were provided with "pads" for connection of lead wires. The Si substrate measured 3 mm square, a size slightly larger than the device area.

Then, the light sensitive area and the surfaces of the electrodes, except for those of the pads, were coated with a 50 nm thick $Al_2O_3$ film, as a coating layer, deposited by magnetron sputtering using an $Al_2O_3$ target having purity of 99.95%. The so prepared diamond thin film sensor chip was adhered to a hermetic seal base with the use of epoxy rein. A power source and a detecting system for resistance changes can be connected to the above pads by wiring of a thin metal film, but in the present Preparation Example, gold wires 25 $\mu$m in diameter were connected to the pads by the ultrasonic bonding method. The other ends of the gold wires were connected to lead pins of the hermetic seal. A frame somewhat higher than the height, where the gold wires were located, was adhered, as a spacer, to the hermetic seal base by means of epoxy resin for use as a diamond thin film sensor head. One of the lead pins connected to the wires, the frame, and the base were all electrically short-circuited. The scintillator crystals of virtually the same size as the frame were adhered onto the frame and encapsulated using epoxy resin to prepare a radiation detecting device. This adhesion step was performed in a 100% nitrogen atmosphere.

To the radiation detecting device, a direct current power source for bias supply and a resistor for detecting resistance changes of the chip were connected in series, and a capacitor for following pulsed resistance changes of the chip was connected in parallel. The resistance value of the resistor and the capacity of the capacitor can be adjusted, as appropriate, according to the amounts of resistance changes of the chip and the pulse width to be detected. In the present Preparation Example, the capacity of the capacitor was set at 2.5 nF.

Example 1

The radiation detecting apparatus of the present invention shown below was constructed using the scintillator produced in Production Example 1 and the diamond thin film sensor prepared in Preparation Example 1.

The scintillator and the diamond thin film sensor were installed inside a chamber filled with a high purity nitrogen gas such that the emission surface of the scintillator and the diamond thin film opposed each other, with a 0.5 mm gap provided therebetween. Further, a constant voltage power source (6641, produced by CLEAR-PULSE) and a signal amplifier/analyzer, as a signal processing system, were connected to the diamond thin film sensor to obtain the radiation detecting apparatus of the present invention. The signal amplifier/analyzer was composed of a preamplifier (581K, produced by CLEAR-PULSE), a shaping amplifier (572, produced by ORTEK), and a multichannel pulse-height analyzer (926, produced by ORTEK).

To evaluate the performance of the radiation detecting apparatus of the present invention, a $^{241}$Am isotope having radioactivity of 1 kBq was used as a radiation source, and the response of the radiation detector to radiation generated by the radiation source was evaluated by the following method: This radiation source was installed in proximity to the scintillator, and $\alpha$ rays generated by the radiation source were projected onto the scintillator. A bias voltage of 50 V was applied to the diamond thin film sensor with the use of the above-mentioned constant voltage power source, and output signals from the diamond thin film sensor were processed using the signal amplifier/analyzer. That is, the output signals were amplified by the preamplifier, further shaped and amplified by the shaping amplifier, and then inputted into the multichannel pulse-height analyzer for analysis, whereby a pulse-height distribution spectrum was prepared.

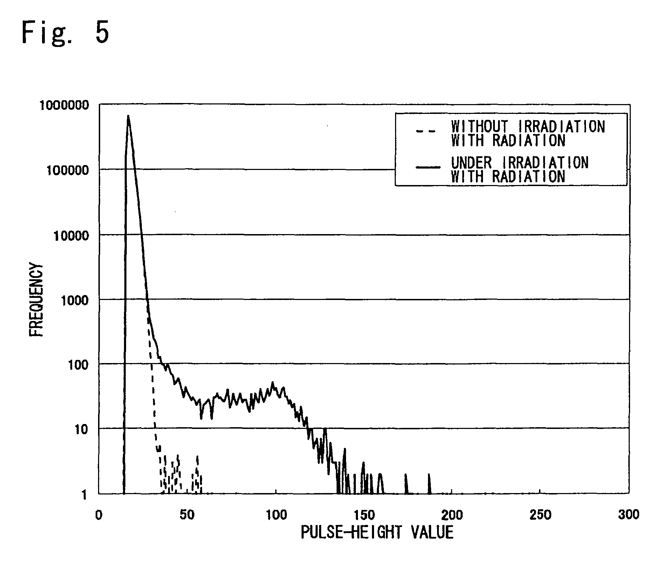

The prepared pulse-height distribution spectrum is shown in Fig. 5. The abscissa of the pulse-height distribution spectrum represents the relative strength of the output signal outputted by the diamond thin film sensor when the radiation was incident, and the ordinate represents the frequency of the output signal at each strength. The solid lines in the drawing show the pulse-height distribution spectrum under irradiation with the radiation, and the dashed lines show the pulse-height distribution spectrum in the absence of irradiation with the radiation. In the pulse-height distribution spectrum, only noise was seen at the pulse-height value or peak value of about 50 or less in the absence of irradiation with the radiation, whereas a marked increase in the signals was noted there under irradiation with the radiation. Thus, the radiation detecting apparatus of the present invention was confirmed to respond to the radiation with sufficient sensitivity. In the pulse-height distribution spectrum, a peak observed in a region where the pulse height value is about 100 is a peak reflecting the energy of the radiation (5.5 MeV). Thus, the radiation detecting apparatus of the present invention was also confirmed to have energy discriminating properties.

Example 2

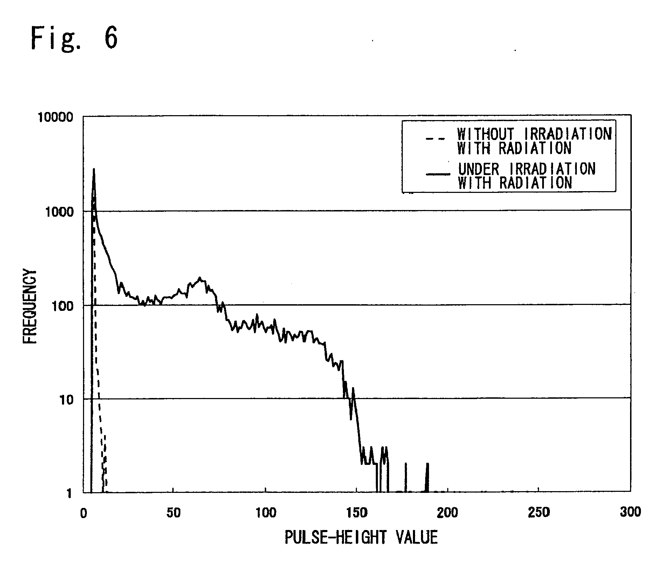

Using the scintillator produced in Production Example 2 and the diamond thin film sensor prepared in Preparation Example 1, a radiation detecting apparatus was constructed, and a pulse-height distribution spectrum was prepared, in the same manner as in Example 1. The prepared pulse-height distribution spectrum is shown in Fig. 6. Solid lines in the drawing show the pulse-height distribution spectrum under irradiation with the radiation, and dashed lines show the pulse-height distribution spectrum in the absence of irradiation with the radiation. In the pulse-height distribution spectrum, only noise was seen at the pulse-height value of about 10 or less in the absence of irradiation with the radiation, whereas a marked increase in the signals was noted there under irradiation with the radiation. Thus, the radiation detecting apparatus of the present invention was confirmed to respond to the radiation with sufficient sensitivity. In the pulse-height distribution spectrum, a peak was observed in a region where the pulse height value was about 70. Thus, the radiation detecting apparatus of the present invention was also confirmed to have energy discriminating properties.

Example 3

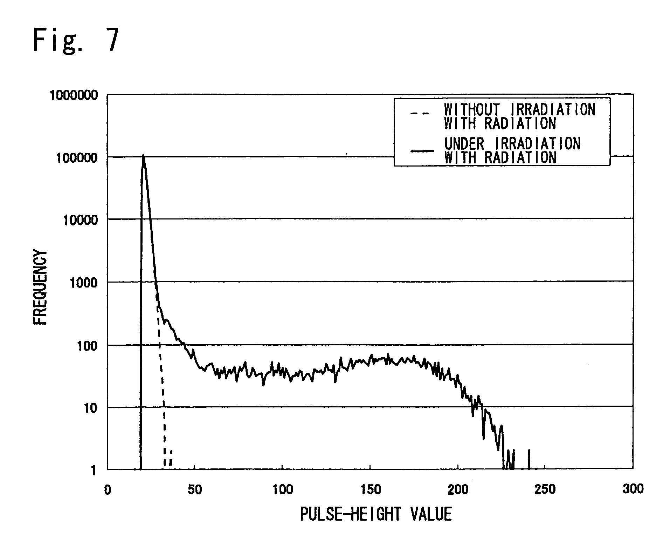

A radiation detecting apparatus was constructed, and a pulse-height distribution spectrum was prepared, in the same manner as in Example 1, except that the scintillator produced in Production Example 3 and the diamond thin film sensor prepared in Preparation Example 1 were used, and that a $^{252}$Cf isotope having radioactivity of 40 MBq was used as the radiation source. That is, in the present Example, neutron rays served as an object to be detected. The prepared pulse-height distribution spectrum is shown in Fig. 7. Solid lines in the drawing show the pulse-height distribution spectrum under irradiation with the radiation, and dashed lines show the pulse-height distribution spectrum in the absence of irradiation with the radiation. In the pulse-height distribution spectrum, only noise was seen at the pulse-height value of about 30 or less in the absence of irradiation with the radiation, whereas a marked increase in the signals was noted there under irradiation with the radiation. Thus, the radiation detecting apparatus of the present invention was confirmed to respond to the radiation with sufficient sensitivity. In the pulse-height distribution spectrum, a peak was observed in a region where the pulse height value was about 180. Thus, the radiation detecting apparatus of the present invention was also confirmed to have energy discriminating properties.

Description of the Reference Numerals

1 Scintillator
2 Diamond thin film sensor
3 After-heater
4 Heater
5 Heat insulating material
6 Stage
7 Crucible
8 Chamber
9 Radio-frequency coil
10 Pulling-down rod
11 Heater
12 Heat insulating material
13 Stage
14 Crucible
15 Chamber
16 Radio-frequency coil
17 Pulling-up rod
18 Scintillator
19 Diamond thin film sensor
20 Emission surface
21 Diamond thin film
22 Ultraviolet reflecting film
23 Constant voltage power source
24 Amplifier
30 Electrode
31 Pad
32 Coating layer
33 Substrate
34 Ultraviolet light sensitive area

**Claims**

1. A radiation detecting apparatus, comprising:

   a scintillator for converting incident radiation into ultraviolet radiation having a wavelength of 220 nm or less; and
   a diamond thin film sensor for converting the resulting ultraviolet radiation into an electrical signal, and
   wherein the radiation is transformed to the electrical signal.

2. The radiation detecting apparatus according to claim 1, wherein the scintillator is metal fluoride crystals.

3. The radiation detecting apparatus according to claim 1 or 2, wherein the scintillator is a scintillator containing a rare earth element.

4. The radiation detecting apparatus according to claim 1, 2 or 3, wherein the scintillator is a scintillator which performs core-valence light emission.

5. The radiation detecting apparatus according to claim 1, 2, 3, 4 or 5, wherein the scintillator is a scintillator containing 0.5 to 20 atoms/nm$^3$ of $^6$Li per unit volume, and having an effective atomic number of 10 to 40, and the radiation is neutron rays.

6. The radiation detecting apparatus according to any one of the preceding claims, wherein the diamond thin film sensor is of a photoconductor type.

7. The radiation detecting apparatus according to claim 6, wherein a light receiver in the photoconductor type diamond thin film sensor comprises polycrystalline or highly oriented undoped diamond.

8. The radiation detecting apparatus according to claim 6 or 7, further comprising
a pair of electrodes, with a light sensitive area of diamond being sandwiched therebetween, and
a power source for applying a voltage between the electrodes of 20 V or higher, but 250 V or lower, and
wherein a coating layer comprising a compound which is any one of $SiO_2$, $Al_2O_3$, AlN, $CaF_2$ and $MgF_2$ is provided in contact with the light sensitive area and surfaces of the electrodes.

9. The radiation detecting apparatus according to claim 8, wherein a thickness of the coating layer is 3 nm or more, but 100 nm or less.

10. The radiation detecting apparatus according to claim 8 or 9, wherein spacing between the electrodes is 5 $\mu$m to 50 $\mu$m.

11. The radiation detecting apparatus according to any one of the preceding claims, having a structure in which the single scintillator and the single diamond thin film sensor are provided in a pair, and a plurality of the pairs are arranged in a linear form or a planar form.

12. A method for detecting radiation, comprising:

allowing radiation to be incident on a scintillator to convert the radiation into ultraviolet radiation;
then guiding the resulting ultraviolet radiation to a diamond thin film sensor to generate an electrical signal; and
detecting the resulting electrical signal.

# Fig. 1

RADIATION

RADIATION DETECTING
APPARATUS

1

ULTRAVIOLET
RADIATION

2

ELECTRICAL SIGNAL

SIGNAL PROCESSING SYSTEM

# Fig. 2

8

5

7

4

3

9

MELT OF
MATERIALS

GROWN CRYSTALS

METAL WIRE

EVACUATOR

10

6

# Fig. 3

SEED CRYSTALS

GROWN CRYSTALS

1 7

1 2

1 4

1 5

1 1

1 6

MELT OF MATERIALS

EVACUATOR

1 3

# Fig. 4

RADIATION

RADIATION DETECTING APPARATUS

1 8

2 2

2 0

ULTRAVIOLET
RADIATION

2 1

1 9

BIAS SIGNAL

ELECTRICAL SIGNAL

SIGNAL PROCESSING SYSTEM

2 3

2 4

# Fig. 5

Fig. 6

Fig. 7

# Fig. 8

# Fig. 9

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Kazushi Hayashi et al.** Durable ultraviolet sensors using highly oriented diamond films. *Diamond & Related Materials,* 2006, vol. 15, 792